# EUROPEAN PATENT SPECIFICATION

(11) **EP 2 642 638 B1**
(45) Date of publication and mention of the grant of the patent: **21.11.2018**
(21) Application number: 13159909.4
(22) Date of filing: 19.03.2013
(51) Int. Cl.: H02K 5/22, H02K 9/22

(54) **Aircraft dynamoelectric machine with feeder lug heatsink**
Dynamoelektrische Flugzeugmaschine mit Speisestutzenkühlkörper
Machine dynamoélectrique d'aéronef avec dispositif dissipateur thermique à oreille

(30) Priority: 19.03.2012 US 201213423740
(43) Date of publication of application: 25.09.2013
(73) Proprietor: Hamilton Sundstrand Corporation, Windsor Locks, CT 06096-1010 (US)
(72) Inventor: Pal, Debabrata, Hoffman Estates, IL Illinois 60195 (US)
(74) Representative: Dehns

(56) References cited:
- JP-A- 2004 215 368
- JP-A- 2010 268 633
- US-A1- 2003 203 673
- US-A1- 2011 045 686
- US-B2- 7 872 385

## Description

### BACKGROUND OF THE INVENTION

The present invention is related to dynamoelectric machines and, in particular, to reducing the temperature at or near the feeder lugs of a dynamoelectric machine.

A dynamoelectric machine is any type of machine that can generate motion from electricity or vice-versa and includes, for example, motors and generators. Regardless of whether the machine is a motor or a generator, feeder lines are used to transfer electrical power either into or out of the internal portions of the machine.

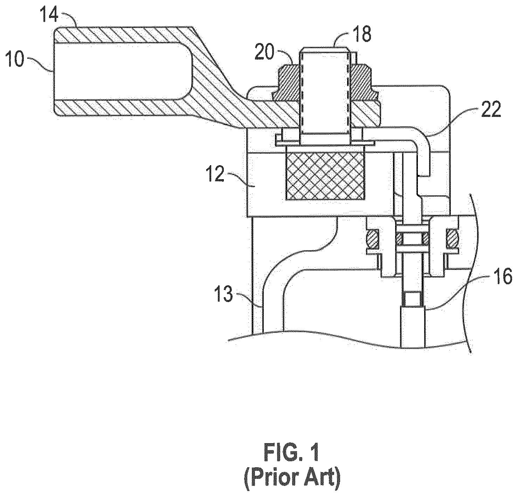

As illustrated in FIG. 1, a feeder line 10 is connected to a terminal block 12 of a machine via a feeder lug 14. As illustrated, electrical power is transferred between the feeder line 10 and an internal connection 16 that connects to the stator (not shown) of the machine 13. The connection path includes the feeder lug 14 which is attached to and secured on a terminal stud 18 by a fastener or nut 20. The terminal stud 18 is also in electrical communication with a terminal lead 22 that is in electrical communication with the internal connection 16. Heat is generated within the lug 14 due to, for example, the resistance in the feeder line 10. Furthermore, the heat can further be increased by improper stripping of the feeder line 10 and crimping of the lug 14 to the feeder line 10.

In some aircraft situations, the machine 13 can be located in close proximity to a turbine engine that generates significant radiant heat. This radiant heat, in combination with the resistive heat, can lead to excessive heating of the feeder lug 14. Indeed, the radiant heat alone can be in range of 650 degrees C (about 920 Kelvin) which creates ambient air near the lugs 14 in the range of 255 degrees C (about 528 Kelvin). One approach is to provide a heat shield between the turbine engine and the machine 13. Such an approach, however, does not address the cooling needed for the lugs 14.

US 2011/0045686 A1 relates to sealed power connections. US 7872385 B2 relates to an electric power connection assembly with a heat diverting mechanism for an electric motor. US 2003/203673 A1 relates to rotating electrical machines such as high speed generators. JP 2004215368A relates to a motor in which a drive circuit of the motor is housed inside a motor case. JP 2010 268644 A relates to a motor unit.

### BRIEF DESCRIPTION OF THE INVENTION

According to one embodiment, an aircraft system is provided as claimed in claim 6.

According to another embodiment, a generator for use in on an airplane is provided as claimed in claim 1.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-section of a feeder lug coupled to a terminal block according to the prior art;
FIG. 2 is cross-section of a feeder lug coupled to a terminal block that includes a heat sink feature according to an embodiment of the present invention; and
FIG. 3 is a cross-section of a heat sink surrounding the feeder lines in a three-phase system.

### DETAILED DESCRIPTION OF THE INVENTION

Recent aircraft turbine engine designs include one or more dynamoelectric machines (referred to herein as "machines" and including at least motors and generators) mounted near a high-heat portion such as the high-temperature diffuser, of the engine. In such cases, the terminal and lugs of the machine are heated by both the resistive heat and radiant heat described above. This results in unacceptably high terminal temperature, which may lead to O-ring leakage and terminal block failure. According to at least one embodiment of the present invention, an integral heat sink is provided that sinks heat from the lugs into an internal portion of the machine. The heat sink is in thermal contact with the housing of machine and transfers heat into the housing. The housing is cooled by internal cooling techniques such as a liquid cooling system. At least one embodiment further includes a heat shield that shields a portion of the heat sink from ambient air.

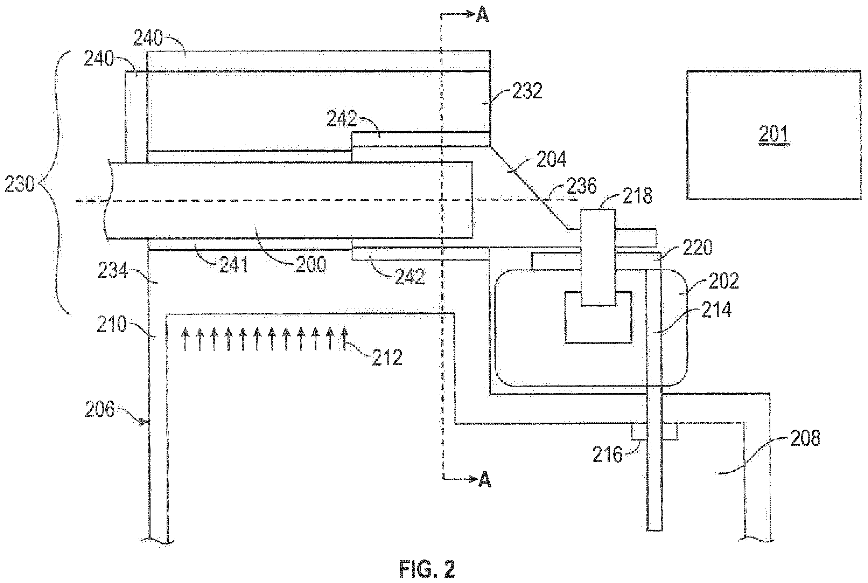

FIG. 2 shows a feeder line 200 coupled to a terminal block 202 of a machine 206 via a feeder lug 204. The feeder line 200 can include insulating material 241 that may be removed at an end thereof so that feeder line 200 can be electrically coupled to the feeder lug 204. The machine 206 can be located near or coupled to a turbine engine 201in one embodiment to form a system that includes the turbine engine 201, the machine 206 and the heat sink 230. In one embodiment, the turbine engine 201 provides rotary power to the machine 206 from which the machine 206 can generate electricity.

The machine 206 includes an outer housing 210 and inner portion 208. The contents of the inner portion of electric machine 208 are not illustrated for reasons of clarity but it shall be understood that the inner portion 208 can include any type of elements normally included in a machine such as a rotor and a stator. As is well known in the art, the motion of the rotor or a pump can cause a cooling fluid 212 (e.g., oil or other coolant) to circulate within the outer housing 210. Cooling sprays and other methods are used to cool heat dissipating electromagnetic components inside the electric machine 208. In addition, these cooling sprays impinge on the outer housing 210 and provides cooling to the housing 210. The motion of the fluid serves to cool the components within the outer housing 210 as well as the outer housing 210 itself. This cooling can serve to, for example, allow the outer housing 210 to serve as a heat sink to the terminal block 202 and dissipate terminal block heat created by radiant heat transfer from ambient air, by internal heat generation due to electrical contact resistance between feeder line 200 and lug 204, and heat generation in reduced number of strands due to improper stripping of strands that form the possibly multi-stranded feeder line 200.

The feeder line 200 can be any type of electrical transmission line and can be insulated or not. In one embodiment, the feeder line 200 has an end stripped and then inserted into the feeder lug 204. Due to improper stripping of a multi-stranded feeder line 200, some strands are not stripped and they do not carry electrical current or carry partial currents. This can result in increased feeder line resistance and increased heat loss. The feeder lug 204 can then be crimped or otherwise caused to securely fasten to the feeder line 200. As described above, heat is generated within the lug 204 due to, for example, the resistance in the feeder line 200. Furthermore, the generated heat can further be increased by improper stripping of the feeder line 200 and improper crimping of the lug 204 to the feeder line 200. In the prior art, there are no means of sinking or dissipating this heat. In fact, the radiant air in this region may actually increase, rather than decrease, the heat of the lug. It has been discovered that such heating can have adverse effects. For instance, the terminal block 202 includes an internal connection 214 that extends into the inner portion 208 and connects to, for instance, the stator of the machine 206. A seal is formed around the internal connection 214 and the outer housing 210 by a sealing element 216 that can be, for example, an o-ring. Heat from the feeder lug 204 can cause the internal connection 214 to heat (via terminal stud 218 and terminal lead 220), and, as such, cause failure of the sealing element 216. But, embodiments of the present invention can transfer this heat from feeder lug 204 as is described herein.

According to one embodiment of the present invention, heat from the feeder lug 204 is transferred to the outer housing 210 via a heat sink 230. The heat sink 230 includes at least two portions. As illustrated, the heat sink 230 includes an upper portion 232 and a lower portion 234. In the illustrated embodiment, the upper portion 232 and the lower portion 234 are separate pieces that join along a join line 236. While not required, in one embodiment, the join line 236 is arranged such that it exists along a central axis of the feeder line 204.

As shown, the lower portion 234 is formed as part of the outer housing 210. It shall be understood that the lower portion 234 could be separate from the outer housing 210 as long as it is arranged such that it is in thermal contact with the lower portion 234. In one embodiment, one or both of the upper and lower portions 232, 234 are formed of a thermally and electrically conductive material such a metal. Regardless of the formation, the heat sink 230 allows for heat from the feeder lug 204 to be transferred to the outer housing 210 where it can be transferred to the cooling fluid 212. According to one embodiment, one of more external sides of the heat sink 230 can be coated with a heat shield material 240 to protect it and the feeder lug 204 from radiant heating.

As illustrated, the heat sink 230 surrounds portions of both the feeder line 200 and the feeder lug 204. According to an alternate embodiment, only portions of the feeder lug 204 are surrounded by the heat sink 230.

In one embodiment, the heat sink 230 is electrically insulated from the feeder lug 204 by insulator 242. In one embodiment, the insulator 242 is thermally conductive and electrically insulating. For instance, the insulator 242 could be formed of one or more layers of metals having an electrically insulating material disposed thereon. For instance, the insulator 242 could be formed of multiple layers of anodized aluminum coated with an oxide and formed into a shape (e.g., a cylinder) to surround the feeder lug 204. In a particular, embodiment, the insulator is formed of between 10-50 (e.g., 20) layers of such a material. In one embodiment, the insulator 242 may also surround a portion of the feeder line 200. A commercial off the shelf material ANO-FOL can be used for this application. As an alternative, aluminum nitride ceramic or a thermally conductive polymer based insulation could be used to form the insulator 242.

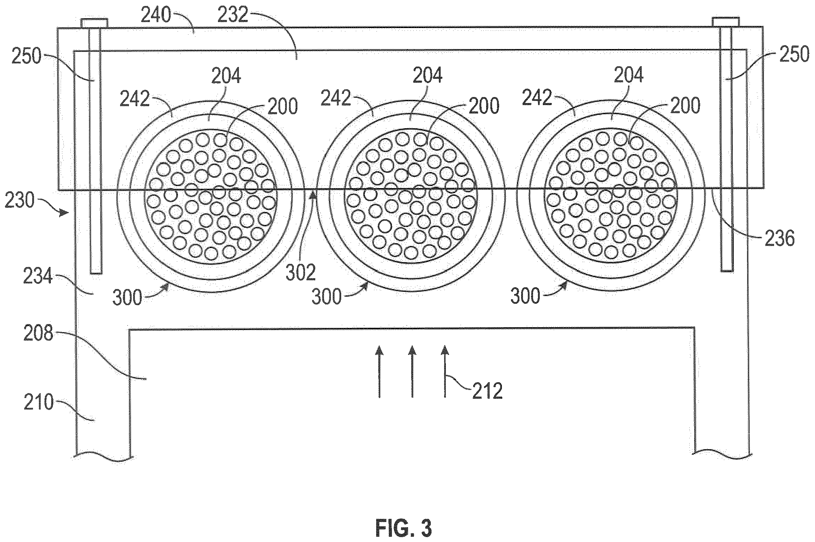

FIG. 3 is a cross section of the heat sink 230 shown in FIG. 2 taken along line A-A. In the illustrated embodiment, the lower portion 235 is formed at part of the outer housing 210. As such, the cooling fluid 212 in the internal portion 208 transfers heat from the feeder lugs 204. The lower portion 234 includes three semicircular recesses 300 formed on an upper surface 302 thereof. The upper portion 232 includes similar recesses. It shall be understood that the particular shape of the recesses 300 is defined by the shape of the feeder lines 200 and/or the feeder lugs 204. As illustrated, the heat sink 230 is coupled around and sinks heat from three feeder lines 200. Such a configuration may exist when the machine produces three phase electricity. Of course, the number of feeder lines 200 can vary from one to any number. In one embodiment, the upper and lower portions 232, 234 are held together by fasteners 250.

In any of the above embodiments, the upper and lower portions 232, 234 can be formed of any thermally conductive material. In the event that the material is also electrically conductive, the insulator 242 serves to prevent electrical energy from the feeder lugs 204 from being transferred into heat sink 230 and/or into the outer housing 210.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A generator for use in an airplane, the generator comprising:
a terminal block (202);
a feeder lug (204) in electrical communication with the terminal block (202); and
a heat sink (230) surrounding and in thermal communication with the feeder lug;
an outer housing (210) including one or more recesses (300) formed therein adapted to receive the feeder lug, **characterized in that**
the heatsink (230) includes a first portion and a second portion, the first portion including the one or more recesses (300) and the second portion being configured to mate with the first portion such that the first and second portion surround the feeder lug (204).

2. The generator of claim 1, further comprising:
a thermally conductive electrically insulating insulator (242) surrounding the feeder lug (204) and disposed between the feeder lug (204) and the heat sink (230).

3. The generator of claim 2, wherein the insulator (242) is formed of one or more layers of aluminum coated with an oxide.

4. The generator of claim 2, wherein the insulator (242) is formed of aluminum nitride ceramic.

5. The generator of claim 1, further comprising:
a thermally insulating material disposed on an external portion of the heat sink.

6. An aircraft system comprising:
a turbine engine (201); and
the dynamoelectric machine (206) of claim 1 coupled to or located proximate the turbine engine (201).

7. The aircraft system of claim 6, further comprising:
a thermally conductive electrically insulating insulator (242) surrounding the feeder lug (204) and disposed between the feeder lug and the heat sink (230).

8. The aircraft system of claim 7, wherein the insulator (242) is formed of one or more layers of aluminum coated with an oxide, or wherein the insulator (242) is formed of aluminum nitride ceramic, or wherein the insulator (242) is formed of a thermally conductive polymer based insulation, or wherein the insulator (242) is formed as a cylinder.

9. The aircraft system of claim 6, wherein the dynamoelectric machine (206) is a liquid cooled generator.

10. The aircraft system of claim 6, wherein the heat sink (230) is formed of a thermally and electrically conductive material.

11. The aircraft system of claim 10, further comprising:
a thermally insulating material disposed on an external portion of the heat sink (230).

## Patentansprüche

1. Generator zur Verwendung in einem Flugzeug, wobei der Generator Folgendes umfasst:
einen Anschlussblock (202);
einen Speisestutzen (204) in elektrischer Kommunikation mit dem Anschlussblock (202); und
einen Kühlkörper (230), der den Speisestutzen umgibt und in thermischer Kommunikation damit steht;
ein Außengehäuse (210), das eine oder mehrere darin ausgebildete Vertiefungen (300) beinhaltet, die dazu angepasst sind, den Speisestutzen aufzunehmen, **dadurch gekennzeichnet, dass**
der Kühlkörper (230) einen ersten Abschnitt und einen zweiten Abschnitt beinhaltet, wobei der erste Abschnitt die eine oder mehreren Vertiefungen (300) beinhaltet und der zweite Abschnitt dazu konfiguriert ist, derart mit dem ersten Abschnitt zusammenzupassen, dass der erste und zweite Abschnitt den Speisestutzen (204) umgeben.

2. Generator nach Anspruch 1, ferner umfassend:
einen wärmeleitfähigen elektrisch isolierenden Isolator (242), der den Speisestutzen (204) umgibt und zwischen dem Speisestutzen (204) und dem Kühlkörper (230) angeordnet ist.

3. Generator nach Anspruch 2, wobei der Isolator (242) aus einer oder mehreren Schichten aus mit einem Oxid beschichtetem Aluminium ausgebildet ist.

4. Generator nach Anspruch 2, wobei der Isolator (242) aus Aluminiumnitrid-Keramik ausgebildet ist.

5. Generator nach Anspruch 1, ferner umfassend:
ein wärmeisolierendes Material, das an einem äußeren Abschnitt des Kühlkörpers angeordnet ist.

6. Flugzeugsystem umfassend:
ein Turbinentriebwerk (201); und
die dynamoelektrische Maschine (206) nach Anspruch 1, die an das Turbinentriebwerk (201) gekoppelt oder nahe diesem angeordnet ist.

7. Flugzeugsystem nach Anspruch 6, ferner umfassend:
einen wärmeleitfähigen elektrisch isolierenden Isolator (242), der den Speisestutzen (204) umgibt und zwischen dem Speisestutzen und dem Kühlkörper (230) angeordnet ist.

8. Flugzeugsystem nach Anspruch 7, wobei der Isolator (242) aus einer oder mehreren Schichten aus mit einem Oxid beschichtetem Aluminium ausgebildet ist oder wobei der Isolator (242) aus Aluminiumnitrid-Keramik ausgebildet ist oder wobei der Isolator (242) aus einer wärmeleitfähigen Isolierung auf Polymerbasis ausgebildet ist oder wobei der Isolator (242) als Zylinder ausgebildet ist.

9. Flugzeugsystem nach Anspruch 6, wobei die dynamoelektrische Maschine (206) ein flüssigkeitsgekühlter Generator ist.

10. Flugzeugsystem nach Anspruch 6, wobei der Kühlkörper (230) aus einem wärmeleitfähigen und elektrisch leitfähigen Material ausgebildet ist.

11. Flugzeugsystem nach Anspruch 10, ferner umfassend:
ein wärmeisolierendes Material, das an einem äußeren Abschnitt des Kühlkörpers (230) angeordnet ist.

## Revendications

1. Générateur pour utilisation dans un avion, le générateur comprenant :
une plaque à bornes (202) ;
une oreille (204) en communication électrique avec la plaque à bornes (202) ; et
un dispositif dissipateur thermique (230) enveloppant et en communication thermique avec l'oreille ;
un boîtier externe (210) comprenant un ou plusieurs évidements (300) formés dans celui-ci adaptés à recevoir l'oreille, **caractérisé en ce que**
le dispositif dissipateur thermique (230) comprend une première partie et une seconde partie, la première partie comprenant les un ou plusieurs évidements (300) et la seconde partie étant configurée pour s'accoupler avec la première partie de sorte que les première et seconde parties enveloppent l'oreille (204).

2. Générateur selon la revendication 1, comprenant en outre :
un isolateur thermiquement conducteur électriquement isolant (242) enveloppant l'oreille (204) et placé entre l'oreille (204) et le dispositif dissipateur thermique (230).

3. Générateur selon la revendication 2, dans lequel l'isolateur (242) est formé d'une ou de plusieurs couches d'aluminium revêtues d'un oxyde.

4. Générateur selon la revendication 2, dans lequel l'isolateur (242) est formé de céramique en nitrure d'aluminium.

5. Générateur selon la revendication 1, comprenant en outre :
un matériau thermiquement isolant placé sur une partie externe du dispositif dissipateur thermique.

6. Système d'aéronef comprenant :
un moteur à turbine (201) ; et
la machine dynamoélectrique (206) selon la revendication 1 couplée à ou située à proximité du moteur à turbine (201).

7. Système d'aéronef selon la revendication 6, comprenant en outre :
un isolateur thermiquement conducteur électriquement isolant (242) enveloppant l'oreille (204) et placé entre l'oreille et le dispositif dissipateur thermique (230).

8. Système d'aéronef selon la revendication 7, dans lequel l'isolateur (242) est formé d'une ou de plusieurs couches d'aluminium revêtues d'un oxyde, ou dans lequel l'isolateur (242) est formé de céramique en nitrure d'aluminium, ou dans lequel l'isolateur (242) est formé d'un isolant à base de polymère thermiquement conducteur, ou dans lequel l'isolateur (242) est formé comme un cylindre.

9. Système d'aéronef selon la revendication 6, dans lequel la machine dynamoélectrique (206) est un générateur refroidi par liquide.

10. Système d'aéronef selon la revendication 6, dans lequel le dispositif dissipateur thermique (230) est formé d'un matériau thermiquement et électriquement conducteur.

11. Système d'aéronef selon la revendication 10, comprenant en outre :
un matériau thermiquement isolant placé sur une partie externe du dispositif dissipateur thermique (230).
